(19) Europäisches Patentamt
European Patent Office
Office européen des brevets

(11) **EP 3 707 449 B1**

(12) **EUROPEAN PATENT SPECIFICATION**

(45) Date of publication and mention
of the grant of the patent:
**22.12.2021 Bulletin 2021/51**

(51) Int Cl.:
*F26B 3/347* (2006.01)    *A23C 19/097* (2006.01)
*A23L 3/40* (2006.01)    *F26B 15/18* (2006.01)
*F26B 21/08* (2006.01)    *F26B 21/12* (2006.01)

(21) Application number: **18811921.8**

(22) Date of filing: **08.11.2018**

(86) International application number:
**PCT/IB2018/058779**

(87) International publication number:
**WO 2019/092632 (16.05.2019 Gazette 2019/20)**

(54) **OVEN AND METHOD FOR BAKING CHEESE-BASED FOOD PRODUCTS**

OFEN UND VERFAHREN ZUM BACKEN VON LEBENSMITTELPRODUKTEN AUF KÄSEBASIS

FOUR ET MÉTHODE POUR CUIRE DES PRODUITS ALIMENTAIRES À BASE DE FROMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.11.2017 IT 201700128253**

(43) Date of publication of application:
**16.09.2020 Bulletin 2020/38**

(73) Proprietor: **SLB S.r.l.**
**25124 Brescia (IT)**

(72) Inventor: **SANGIACOMO, Francesca**
**25124 Brescia (IT)**

(74) Representative: **Biesse S.r.l.**
**Via Corfù, 71**
**25124 Brescia (IT)**

(56) References cited:
**FR-A1- 2 787 179        US-A- 5 165 948
US-A1- 2015 264 947    US-A1- 2015 313 273**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 707 449 B1

## Description

## Field of the Invention

The present invention concerns the sector of industrial ovens for baking food products and, in particular, an oven and a method for baking cheese-based food products.

## State of the Art

The sector of baked food products of the packaged type is particularly relevant; in specific, the sector of light meals, also named snacks, is increasingly growing. The so-called *shelf-life,* i.e. the time period within which the food is hygienically suitable for consumption if maintained under the proper preservation conditions, is a very important parameter for these types of products, in particular for marketing and distribution reasons. Normally, a shelf-life of at least 4 months from production date, preferably of at least 12 months, in particular for products intended to be exported, is required for snacks. Moreover, these should preferably be preserved outside of the refrigerator to simplify and reduce transport and storage costs.

Ovens, comprising at least one baking chamber in which the product to be baked and heating means to bake the product are arranged, can be used for these types of products.

Traditional ovens can be static, i.e. only provided with heating means, or ventilated, i.e. provided with means to generate a flow of air inside the baking chamber in order to obtain a better diffusion of the heat. However, this ventilation does not prevent the baking chamber from becoming saturated with the water vapor produced while baking the food products.

In particular, in case of cheese-based food products or anyhow of ingredients having a high moisture content, i.e. higher than or equal to 25% of their weight, the food must also be dehydrated while baking so that to remove a high percentage of its initial moisture.

The expression "cheese-based food products" concerns food products whose ingredients comprise cheese for at least 50% of their total weight. The description will refer to cheese-based food products, without however excluding other ingredients with high moisture content. Moreover, the cheese used can be of the plant-based type.

In order to be pleasant for the consumer, baked cheese-based food products must be crumbly and crunchy, and they must maintain these characteristics throughout their shelf-life.

In the case of cheese-based food products, it was noticed that a baked food product with high residual moisture causes the product to deteriorate over time, in particular in terms of consistency. In fact, the product tends to become hard and rubbery, rather than crumbly and crunchy. Moreover, in the case of cheese-based baked products, also named dry products, too much residual moisture causes the rancidity of the food over time.

In fact, analyses and checks have demonstrated that residual moisture in the baked food product of more than 5% can cause a deterioration of the organoleptic properties of the product over time, even if suitably preserved, already one month following the date of production, and this deterioration is gradual and increasing with the passing of time. Obviously, this drawback is particularly disadvantageous for food products with a medium to long preservation of the type considered herein and which have a shelf-life of at least 4 months, preferably of 12 months.

Moreover, cheese also has a relevant fat content and therefore the vapor that must be extracted from the food while baking is associated with fat particles and is therefore heavy and tends to stagnate on the surface of the food itself, not allowing the effective and homogeneous removal of the moisture in the whole food product, with consequent disadvantages with respect to the proper shelf life, over time, of the food product obtained.

The document US 2015/264947 concerns a process for producing dry sausages, comprising a rapid partial drying of sausage parts. After the steps necessary for the preparation of the sausage parts, the process comprises their fermentation, the thermal treatment of the sausage parts, their positioning on a conveyor, the passage of the conveyor belt and sausage parts through a chamber and the drying of the sausage parts already partially desiccated. The process also includes the inlet air flow of conditioned air in the chamber, having a relative humidity lower than about 60% and a temperature between about 4.44°C (40°F) and 54.44°C (130°F) and the introduction of microwaves in the chamber. The supply of air and microwaves, as the drying conditions, are set to reduce the moisture content of the meat to a predefined moisture/protein ratio.

Summary of the Invention

Object of the present invention is to provide a baking oven and method for producing baked cheese-based food products that allow to overcome the aforesaid drawbacks and to effectively remove the moisture from the baked food product.

A further object is to provide a baking oven that allows the homogeneous baking and dehydration of the whole food product obtained.

A further object is to provide a baking oven that allows to obtain a cheese-based food product with a shelf-life of at least 4 months outside of the refrigerator, without requiring additional additives or preservatives, and which maintains its organoleptic properties until the expiration date.

In its first aspect, the present invention therefore concerns a baking oven according to claim 1 for baking and preparing food products comprising cheese or entirely constituted by cheese.

In particular, the baking oven comprises a baking chamber, a conveyor belt movable in the baking chamber for supplying and unloading food products, heating means to heat the food products in the baking chamber, which are preferably adjustable, for example microwaving means, extracting means to extract air and vapor from the baking chamber and a control unit provided with program means. The baking chamber is insulated from the outside, except for an inlet and an outlet for the conveyor belt.

Advantageously, the flow rate of the extracting means is adjusted by program means so that, during operations, to extract from the baking chamber a flow rate Q of air and water vapor equal to or higher than:

$$Q = \frac{V}{(U_{OUT} - U_{IN}) \cdot d_A}$$

where:

Q is the volumetric flow rate of air and water vapor to be withdrawn from the baking chamber per each kilogram of food products passing through the baking chamber itself,

V is the amount of water vapor to be removed per each kilogram of food product passing through the baking chamber,

$U_{IN}$ is the specific humidity of the air entering the baking chamber,

$U_{OUT}$ is the specific humidity of the air withdrawn from the baking chamber,

$d_A$ is the air density,

wherein the vapor amount V is the difference between the water content $X_{IN}$ in each kilogram of food product to be baked, inserted in the baking chamber, and the water content $X_{OUT}$ being in each kilogram of baked food product extracted from the baking chamber, where $V = X_{IN} - X_{OUT}$, with $X_{OUT} < 50$ grams.

The suggested solution allows to obtain, at the outlet of the baking chamber, a baked food product having residual moisture lower than 5% by weight and, therefore, a shelf-life of more than four months at room temperature.

In other words, taking care of operating the oven as described above guarantees that the baked food product is sufficiently dehydrated to last for long time outside of the refrigerator, more than 4 months. This simplifies the logistics related to the food product, which can simply be packaged and shipped without requiring refrigeration.

Moreover, the low residual moisture, lower than 5%, maintains the baked food product crumbly and crunchy and therefore desirable for consumers through the whole shelf-life thereof.

Preferably, the extracting means are sized to extract at least 20m$^3$ of air and vapor per each kilogram of food product passing through the baking chamber. If required, the extracting means are adjustable to extract a higher flow rate.

For example, for the calculation of the flow rate Q, it is possible, in a first approximation, to consider the air density value $d_A$ in standard conditions (pressure 1 atmosphere and temperature 25°C), equal to 1.225 kg/m$^3$.

Preferably, the oven also comprises air inflow means for the air inflow into the baking chamber. In the preferred embodiment, the inflow means are at least arranged next to the inlet of the baking chamber. Therefore, advantageously, the air entered the baking chamber is mixed with the humidity, in the vapor form, emitted by the food products in transit; the air and vapor are extracted by extracting means. In an embodiment, the air inflow means comprise at least one environmental control battery for the inlet air flow of treated air, having a predefined temperature and/or humidity, in the baking chamber.

Alternatively, the air inflow into the baking chamber can be directly forced by extracting means, which suck the air in the baking chamber through the inlet and outlet for the conveyor belt.

Generally, if the air introduced into the baking chamber is ambient air, the specific humidity of the air introduced into the baking chamber can be measured with suitable and easy to find tools on the market; instead, if the air was introduced into the baking chamber through specific treatment units or batteries, the specific humidity value of the inlet air flow is imposed by these means.

Preferably, the air inflow means are configured to direct, onto the surface of the conveyor belt, an inlet air flow intercepting the conveyor belt for its whole width. Similarly, the extracting means are configured to extract a flow of air and vapor by intercepting the whole width of the conveyor belt. For example, the inflow means and the extracting means respectively comprise at least one inflow port and at least one outflow port extending along the whole width of the conveyor belt.

In the preferred embodiment, the air inflow means comprise at least one inflow port fluidically connected with a fan, and the extracting means comprise at least one outflow port fluidically connected with at least one suctioning device. The inflow and outflow ports intercept the whole width of the conveyor belt and are spaced from one another at a distance equal to at least half of the length of the baking chamber. This configuration creates a flow of air and vapor onto the surface of the conveyor belt next to its whole width and next to at least half of the length of the baking chamber, preferably the half of the conveyor belt next to an initial and intermediate baking step of the food products.

Preferably, the flow of air covers at least two thirds of the length of the conveyor belt and even more preferably covers almost the whole length of the conveyor belt in the baking chamber.

Therefore, advantageously, the air introduced into, or entering, the baking chamber intercepts the surface of the food product being baked, mixes with the vapor escaping from it and is sucked with it by the suctioning means, preventing the air of the baking chamber from becoming vapor saturated and therefore allowing a further removal of vapor from each food product, until reaching residual moisture equal to or lower than 5% in the baked food products ready to be packaged.

In other words, the presence of the inflow and outflow ports configured to intercept the whole width of belt allows the formation of an air blade running along the surface of the food product being baked, thus removing the humidity gradually extracted thanks to the heating means, in order to obtain a more effective and homogeneous removal of moisture from the food product, also from its bottom part that is leaned against the conveyor belt.

Preferably, the inlet air flow and the outlet air and vapor flow are laminar.

Preferably, the oven comprises adjusting means to adjust the flow rate of the air entered by the inflow means and the flow rate of the air and vapor extracted by the extracting means, for example valves, shutters or speed regulators of the extractor fans or blowers. Optionally, the inflow means and/or extracting means are combined with air filtering means.

Preferably, the oven is maintained slightly depressurized by taking care of maintaining the inlet air flow rate lower than the outlet air and vapor flow rate. This circumstance favors the extraction of vapor and, if applicable, an expansion of the food product being baked and the formation of small cavities, in particular in baked cheese, which make the food product obtained particularly crunchy.

In the preferred embodiment, the extracting means comprise a plurality of outlet ports fluidically connected with one or more suctioning devices. Each outlet port withdraws a corresponding part of the air and vapor flow rate extracted from the baking chamber. The outlet ports are prearranged aligned along the belt and/or side by side to extract the air and vapor from several points of the baking chamber so that to remove the humidity more effectively, as it is gradually extracted from the food product while passing through the baking chamber.

Moreover, filtering means combined with inflow means and/or extracting means can be provided so that the air introduced is filtered and suitable for coming into contact with the food during the baking step and/or so that fat particles or other can be removed from the outlet air flow of the baking chamber in order to allow it to disperse it without polluting.

Preferably, the heating means are of the microwave type, since these are particularly adapted to quickly extract moisture from cheese; this allows to dehydrate the food product without drying or burning it.

Alternatively or in addition, the heating means can comprise means suitable for generating and irradiating heat, such as electric resistances and/or infrared heaters.

Optionally, the baking chamber can be constituted by at least two baking sub-chambers, for example of the modular type, provided with removable layers for their cleaning.

In an alternative solution, the air is also heated with electric resistances in addition to the microwaves. The hot air introduced into baking chamber assists the microwaves, thus improving and speeding up the baking of the product. The temperature of the air inflow is adjustable, as well as the power of the microwaves and the speed of the conveyor belt, in order to change the baking parameters according to the recipe and the type of ingredients of the food product being baked.

Preferably, the conveyor belt is closed-loop shaped and combined with a first and a second movement roller. This way, it is possible to produce the food product in a continuous way and to easily unload the food product from the belt and onto the second roller by overturning. In a preferred solution, the rollers are movable between one another, in the sense of moving them closer or away by means of actuators, preferably of the pneumatic type; this way, it is possible to maintain the conveyor belt tensioned while baking, by balancing any possible expansion due to the heat and loosening the tension of the belt when the oven is off, in order to reduce wear and to facilitate the cleaning and maintenance steps.

Advantageously, the conveyor belt can be combined with position sensors in order to check the correct centering, and the actuators can be driven according to the data detected by the position sensors in order to maintain the belt centered with respect to the movement rollers.

In addition, cleaning means, washing means and drying means of the conveyor belt can be combined with a lower part of the oven, in order to carry out these operations in a continuous way.

A second aspect of the present invention concerns the method according to claim 16 for baking food products comprising cheese or entirely constituted by cheese.

The method can be implemented by means of a baking oven having the aforesaid characteristics and therefore comprising a baking chamber closed except for an inlet and an outlet, a conveyor belt movable in the baking chamber for supplying food products to be baked and unloading baked food products, heating means to heat the food products in the baking chamber, extracting means to extract the air and vapor from the baking chamber and a control unit provided with program means.

The method comprises:

a) baking the food products in the baking chamber by the heating means, for example microwaves, by extracting moisture, in the vapor form, from them;
b) programming the flow rate of the extracting means through the control unit until they extract, from the baking chamber, a flow rate Q of air and vapor equal to, or higher than:

$$Q = \frac{V}{(U_{OUT} - U_{IN}) * d_A}$$

where:

Q is the volumetric flow rate of air and vapor to be withdrawn from the baking chamber per each kilogram of food products passing through the baking chamber itself,

V is the amount of vapor to be removed per each kilogram of food product passing through the baking chamber,

$U_{IN}$ is the specific humidity of the air entering the baking chamber,

$U_{OUT}$ is the specific humidity of the air withdrawn from the baking chamber,

$d_A$ is the air density.

The vapor amount V is the difference between the water content $X_{IN}$ in each kilogram of food product to be baked, inserted in the baking chamber, and the water content $X_{OUT}$ being in each kilogram of baked food product extracted from the baking chamber, where $V = X_{IN} - X_{OUT}$, with $X_{OUT} < 50$ grams.

The method allows to obtain a food product having residual moisture lower than 5% by weight and a shelf-life of more than four months at room temperature.

Therefore, and advantageously, the combined action of baking the food product through the heating means, which cause an outflow of vapor from the cheese, and the removal of the vapor from the baking chamber thanks to the extracting means, allows to remove high amounts of humidity, without allowing the vapor to saturate the baking chamber, until reaching residual moisture in the baked food product equal to or lower than 5% of its weight.

Preferably, the heating means are of the microwave type, but other types of heating means used in the baking oven of the food sector are not to be excluded.

Advantageously, the flow rate Q is equal to at least 20m³ per each kilogram of food product passing through the baking chamber.

Preferably, whenever the oven comprises air inflow means for the inflow of air into the baking chamber, the method can also provide an air inflow in the baking chamber by setting the flow rate of the inflow means depending on the flow rate set for the extracting means. Preferably, the flow rate of the inflow means is increased/decreased at the increase/decrease of the flow rate of the extracting means, so that it is lower than the flow rate of the extracting means in order to maintain the baking chamber depressurized.

**Brief description of the figures**

Further characteristics and advantages of the invention will be better highlighted by the review of the following specification of a preferred, but not exclusive, embodiment illustrated for illustration purposes only, and without limitations, with the aid of the accompanying drawings, wherein:

- figure 1 is a schematic view of a baking oven according to the present invention;
- figure 2 shows a perspective view of part of the oven in figure 1;
- figure 3 is a front view of a component of the oven shown in figure 1.

**Detailed description of the invention**

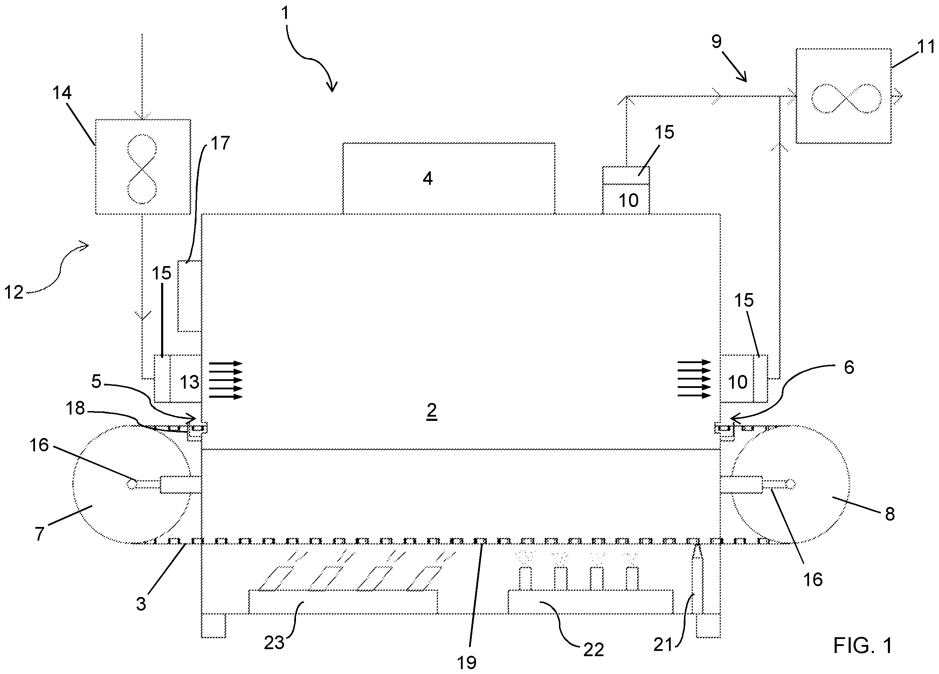

Figure 1 is a schematic view of a baking oven **1** according to the present invention for baking food products containing cheese or entirely constituted by cheese.

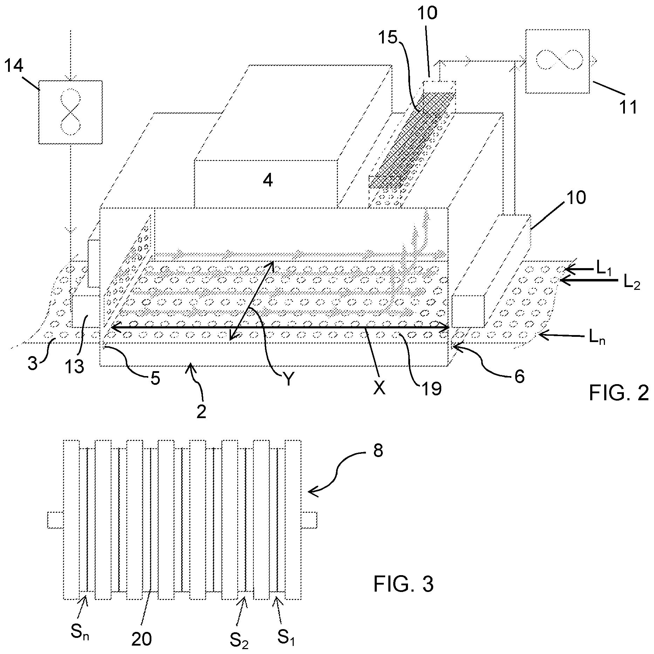

Figure 2 is a schematic, perspective and partially transparent view of a baking oven **1** according to the present invention.

Specifically, the baking oven **1** is configured to bake and dehydrate food products having a high initial moisture content and, in particular, cheese; the baked food product produced by the oven **1** is entirely constituted by, or comprises a high percentage of - at least 40% of the weight - baked or dehydrated cheese.

The oven **1** comprises a baking chamber **2**, a conveyor belt **3** movable in a continuous way in the baking chamber **2** for supplying the food product and for unloading the baked food product, and heating means **4** for baking the food products passing through the baking chamber **2** on the conveyor belt **3**.

The baking chamber **2** has an inlet **5** and an outlet **6** to allow the passage of the conveyor belt **3**; for the rest, it is completely closed, i.e. insulated from the outside environment. In order to facilitate the inspection and cleaning, the baking chamber **2** can have one or more openable portions, not shown. In addition, the baking chamber **2** can be a single block or subdivided in sub-chambers.

The conveyor belt 3 can be constituted of trays movable in the baking chamber **2** by movement means, for example chains or belts, or - as shown in the figures - closed-loop shaped and provided with molds, combined with a first movement roller 7 and with a second movement roller 8, at least one of which is motorized. The first roller **7** and the second roller **8** are respectively arranged upstream and downstream of the baking chamber **2**. The conveyor belt **3** is movable in a continuous way or intermittently in the baking chamber, and its speed can be adjusted as needed.

The heating means **4** are suitable for the baking and dehydration of the food products, thus causing the outflow of moisture, in the vapor form, from the cheese. Preferably, the heating means **4** are of the microwave type and/or can comprise electric resistances and/or infrared heating means.

According to the invention, the oven **1** is provided with extracting means **9** to withdraw air and vapor from the baking chamber **2** during the operations of the oven **1**. The extracting means comprise at least one outflow port **10** connected to at least one suctioning device **11**, two outflow ports **10** are visible in figure 1. The outflow ports **10** withdraw the air mixed to the vapor in several points of the baking chamber **2**, by removing the vapor as it gradually forms. Preferably, an outflow port **10** is provided at the outlet of the baking chamber **2** and at least one outflow port **10** is provided in an intermediate position; in case of more outflow ports **10**, a suctioning device **11** can be provided connected to several outflow ports **10**, as shown in figures **1** and **2**, or a suctioning device **11** can be provided for each outflow port 10.

The extracting means **9** are configured so that to withdraw the flow rate of air and vapor from the baking chamber **2** that is suitable for preventing the vapor extracted from the cheese being baked from saturating the baking chamber **2**.

Specifically, the extracting means are sized so that to extract at least of 20 m³ of air and vapor per each kilogram of cheese passing through the baking chamber. In fact, the sizing of the suctioning means depend on the amount and initial moisture of the cheese, or anyhow of the ingredients of the food product passing through the baking chamber **2**, on the amount of residual moisture in the food product after baking **2** and on the amount of humidity that can be contained in each m³ of air extracted from the baking chamber **2**, amount that can be determined by using a psychrometric diagram and from the amount of cheese that can pass in the baking chamber **2**. In order to obtain a food product with stable characteristics over time, it was detected that the optimal residual moisture must be equal to or lower than 5% of its weight.

More in detail, the flow rate **Q** of air and vapor to be extracted from the baking chamber per each kilogram of food product passing through the baking chamber **2** can be determined according to the following values:

- amount of vapor **V** to be removed from each kilogram of food product passing through the baking chamber **2**; this amount is obtained as the difference between the moisture of the cheese $X_{IN}$ and the moisture of the food product $X_{OUT}$, which, as described above, must be 5% maximum. For example, for a cheese-only food product with moisture of 35%, i.e. a water content of 350 grams per each kilogram, at least 300 grams of water must be evaporated to obtain a food product with a water content of 50 grams maximum.

- difference between the specific humidity of the outflow air $U_{OUT}$ from the baking chamber **2** and the specific humidity of the incoming air $U_{IN}$ in the baking chamber **2**; in other words, in order to know how many grams of vapor **V** emitted from the food product being baked can be contained in each kilogram of air extracted from the baking chamber, the amount of vapor already present in the inlet air flow of the air inflow in the baking chamber 2 and the maximum vapor amount that can be contained in the air extracted by the baking chamber **2** must be considered in order to avoid reaching the saturation point at which the vapor would condense. In turn, the values of $U_{OUT}$ and $U_{IN}$ depend on the temperature and humidity of the outlet and inlet air flow.

- density of air $d_A$ corresponding to the ratio between the air mass and volume it occupies; it is expressed in kilograms per cubic meter and assumed to be equal to 1.225 kg/m³ in standard conditions, i.e. at the pressure of 1 atm, 0% of humidity and temperature of 15°C.

The flow rate **Q** of air and vapor extracted from the baking chamber **2** per each kilogram of food product can be calculated with the formula described in the summary of the invention:

$$Q = \frac{V}{(U_{OUT} - U_{IN}) * d_A}$$

to obtain a food product with a moisture of 5% maximum by weight. This way, once packaged, the food product can be preserved for at least four months outside of the refrigerator, maintaining high organoleptic properties over time.

The inflow of air in the baking chamber can be caused by the same extracting means **9** and can occur through the inlet **5** and outlet **6** of the baking chamber. Preferably, however, the oven **1** also comprises air inflow means **12** that introduce an air flow into the baking chamber **2**, represented by the arrows in figure **2**. The air inflow means comprise at least one air inflow port **13** connected to at least one fan **14** in order to push the air into the baking chamber **2** through the inflow port **13** arranged in proximity of the inlet **5** of the baking chamber.

The inflow **13** and outflow **10** ports are configured to generate a flow of air covering the whole width of the conveyor belt **3** so that to mix with the moisture leaving the food product being baked at the level of the whole width **Y** of the belt. In addition, the ports **10** and **13** are arranged so that the flow of air extends along at least one half, preferably along the whole length **X** of the conveyor belt **3** in the baking chamber **2**. Preferably, laminar air flows are established to remove moisture more effectively from the whole surface of the food product being baked, with respect to the so-called turbulent flows, in which vortex structures, which could put the vapor extracted back in contact with the food product on the conveyor belt **3**, are formed.

Respective filtering means **15** can be combined with each inflow and outflow port for the inflow of air in the baking chamber **2** that is suitable for coming into contact with the food product and to withhold the fat particles and/or cheese particles from the air extracted from the baking chamber **2**.

The extracting means **9** and possibly the inflow means **12** are provided with means for adjusting the flow rate of the air extracted and introduced according to need, depending on the recipe being baked or on the baking conditions. This way, it is also possible to adjust the inlet and outlet air flow so that to slightly depressurize the baking chamber **2**; in fact, this condition favors the expansion of the food product and the formation of little air cavities that make it particularly crunchy.

The heating means **4** can be of the microwave type to quickly obtain the removal of high amounts of humidity from the food product, typically between 4 and 10 minutes. This allows to suitably dehydrate the food product while preventing the cheese from curing/burning. Alternatively or in addition, the heating means can comprise electric resistances and/or be of the infrared type.

In addition, air heating devices - not shown - can be combined with the inflow means so that to obtain the inflow of hot air in the chamber in order to assist the baking and removal of the vapor, and to carry out a combined hot air and microwave baking. The air heating devices can comprise electric resistances. Alternatively or in addition, an air treatment unit, suitable for an inflow of air of the desired temperature and humidity in the baking chamber, can be combined to the inflow means.

Respective actuators **16** can be combined with the first and/or second roller **7**, **8**, preferably of the pneumatic type and which operate to maintain the conveyor belt **3** tensioned while baking in order to avoid the rollers from slipping. In fact, while baking, due to the heat, the conveyor belt can suffer expansions, which are compensated by a displacement of the rollers caused by the actuators **16**. Moreover, the actuators **16** can be driven to bring the rollers **7**, **8** closer to one another, once the baking has been completed, to bring the conveyor belt **3** in a resting condition, in which it is not tensioned in order to prevent it from wearing.

The baking oven **1** further comprises a control unit **17** provided with program means to adjust the flow rate of the air inflow means and air extraction means, the temperature of the air to be introduced into the baking chamber **2**, the power of the heating means, the movement speed of the conveyor belt **3** and the actuators **16**.

In addition, position sensors **18** can be provided at the conveyor belt **3** to detect its position and to send the values detected to the control unit **17**, which reprocesses them through the program means to check for any possible side displacements of the belt **3** with respect to its centered position. This way, if the belt **3** is not correctly centered, the control unit **17** can act on the actuators **16**, by driving them so that to maintain the belt in the correct position.

The conveyor belt **3** can comprise a plurality of molds **19** for containing the initial ingredients and arranged so that to form a plurality of longitudinal lines $L_1$, $L_2$ ... $L_n$ extending along the whole length of the belt and side by side to one another in the direction of the width of the belt. The molds **19** are practically useful whenever the initial ingredient is grated cheese, mixed or not with other ingredients, but also in case of cheese pieces in order to confer a regular shape to the food product.

With reference to figure 3, correspondingly at the level of the outer surface of the first and second rollers **7, 8**, a plurality of grooves $S_1$, $S_2$ ... $S_n$ are obtained, each shaped and sized to receive a respective line of molds.

The grooves of the second roller **8** can also have a raised portion **20** in one of their intermediate positions and which deforms the lower surface of the molds in order to facilitate the unloading of the product from the mold by overturning it on the roller itself.

Returning to figures 1 and 2, the oven can comprise cleaning means **21,** washing means **22** and drying means **23** arranged on its lower part, at the return path of the belt **3** between the second and first roller. The cleaning means **21** can comprise at least one scraper, the washing means **22** can be constituted by a series of nozzles for the outflow of vapor and the drying means **23** can be constituted by a series of hot air outflow channels.

The baking oven **1** described above can be used for baking the food products according to the following steps:

- baking the cheese and possible other ingredients in the baking chamber **2** through the heating means **4**;
- extracting a flow rate Q of air and vapor by the extracting means **9** from the baking chamber **2** in an amount equal to or higher than:

$$Q \simeq \frac{V}{(U_{OUT} - U_{IN})^* d_A}$$

wherein the flow rate Q is preferably equal to at least of $20m^3$ of air and vapor per each kilogram of food product in the baking chamber **2**;
- repeating the preceding steps until obtaining a food product with a maximum residual moisture equal to 5% of its weight, in order to obtain a food product that can be preserved for at least 4 months outside of the refrigerator.

The parameters V, $U_{OUT}$, $U_{IN}$ and $d_A$ correspond to the above description with reference to the baking oven.

Whenever the oven is provided with air inflow means for the air inflow into the baking chamber, the method can provide a further step of adjusting the flow rate of air inflowing in the baking chamber as the flow rate of air extracted varies. In fact, on the basis of an increase/decrease of the value of the flow rate of air extracted, it is possible to vary, in the sense of increasing/decreasing, also the flow rate of the air introduced, preferably so that the flow rate of the air introduced is lower than the flow rate of the air extracted, in order to maintain the baking chamber slightly depressurized.

**Claims**

1. A baking oven (1) for baking food products comprising cheese or constituted by cheese, comprising a baking chamber (2), a conveyor belt (3) movable in the baking chamber (2) for supplying and unloading food products, heating means (4) to heat the food products in the baking chamber, said heat means being selected among microwave heating means, infrared heating means and electric resistance heating means, alternatively to or in combination with one another, and extracting means (9) to extract air and vapor from the baking chamber,

   wherein the baking chamber is insulated from the outside, except for an inlet (5) and an outlet (6) of the conveyor belt (3),
   **characterized by** comprising a control unit (17) provided with program means programmed to adjust the flow rate of said extracting means (9) so that said extracting means (9) extract, from the baking chamber, a flow rate Q of air and vapor equal to or higher than:

   $$Q \simeq \frac{V}{(U_{OUT} - U_{IN}) * d_A}$$

   where:

   Q is the volumetric flow rate of air and vapor to be withdrawn from the baking chamber (2) per each kilogram of food products passing through the baking chamber (2) itself,
   V is the amount of vapor to be removed per each kilogram of food product passing through the baking chamber (2),
   $U_{IN}$ is the specific humidity of the air entering the baking chamber (2),
   $U_{OUT}$ is the specific humidity of the air withdrawn from the baking chamber (2),
   $d_A$ is the air density,
   wherein the vapor amount V is the difference between the water content $X_{IN}$ in each kilogram of food product to be baked, inserted in the baking chamber (2), and the water content $X_{OUT}$ being in each kilogram of baked food product extracted from the baking chamber (2), where $V = X_{IN} - X_{OUT}$, with $X_{OUT} < 50$ grams,
   to obtain a baked food product having residual moisture lower than 5% by weight and shelf-life longer than four months at room temperature.

2. Baking oven (1) according to claim 1, wherein the extracting means (9) extract a minimum of 20m³ of air and vapor per each kilogram of food product passing through the baking chamber (2).

3. Baking oven (1) according to claim 1 or claim 2, wherein $d_A$ is equal to 1.225 kg/m³.

4. Baking oven (1) according to any one of claims 1-3, comprising air inflow means (12) for the air inflow into the baking chamber (2), which are preferably arranged next to at least one inlet (5) of the baking chamber (2).

5. Baking oven (1) according to claim 4, wherein the air inflow means direct, onto the surface of the conveyor belt (3), an inlet air flow intercepting the whole width of the conveyor belt (3), and the extracting means (9) are designed to extract an air and vapor flow by intercepting the whole width of the conveyor belt (3).

6. Baking oven according to claim 4 or 5, wherein the air inflow means (12) comprise at least one inflow port (13) fluidically connected with a fan (14) and the extracting means (9) comprise at least one outflow port (10) fluidically connected with at least one suctioning device (11), said inflow and outflow ports intercepting the whole width of the conveyor belt (3) and being spaced from one another so that the air and vapor flow extends onto the surface of the conveyor belt (3) at the whole width thereof and at least for half the length of the baking chamber (3).

7. Baking oven (1) according to claim 6, wherein said inlet air flow and said outlet air and vapor flow are laminar.

8. Baking oven (1) according to one of claims 4-7, wherein adjusting means to adjust the flow rate of the air entered by the inflow means and the flow rate of the air and vapor extracted by the extracting means, are provided, and wherein air filtering means (15) are optionally combined with the inflow means and/or the extracting means.

9. Baking oven (1) according to one of claims 4-8, wherein the air entered in the baking chamber (2) by the airflow means is ambient air and the inflow means are provided with means for measuring the specific humidity of the incoming air $U_{IN}$ or, alternatively, treating means to treat the air are combined with the inflow means, for the inflow of air having a given specific humidity $U_{IN}$ in the baking chamber (2).

10. Baking oven (1) according to any one of preceding claims 4-9, wherein the inlet air flow rate is lower than the outlet air and vapor flow rate, and the baking chamber (2) is maintained slightly depressurized to aid the vapor extraction and, in case, the expansion of the food products.

**11.** Baking oven (1) according to one of the preceding claims, wherein the extracting means comprise a plurality of outflow ports (10) fluidically connected with one or more suctioning devices (11), wherein each outflow port (10) withdraws a corresponding part of the air and vapor flow rate extracted from the baking chamber (2).

**12.** Baking oven (1) according to one of the preceding claims, wherein the air inflow means are combined with heating means to heat the inlet of air for the air inflow into the baking chamber (2), said heating devices being adjustable.

**13.** Baking oven (1) according to one of the preceding claims, wherein the conveyor belt (3) is of closed loop type and is combined with a first and a second movement roller (7, 8), the rollers being provided with actuators (16) to change their distance so that, during the baking, the conveyor belt (3) is always tensioned, thereby balancing possible expansions of the conveyor belt (3), and that the rollers are moved closer, thereby reducing the tension of the conveyor belt (3) when necessary.

**14.** Baking oven (1) according to claim 13, wherein one or more position sensors (18) are provided to detect the position of the conveyor belt (3), and wherein the actuators (16) of the rollers can be driven for feedback keeping the conveyor belt (3) centered, on the basis of the position signals the position sensors detected.

**15.** Baking oven (1) according to one of the preceding claims, wherein at the bottom part of the oven, at the return path of the conveyor belt (3), cleaning means (21), washing means (22) and drying means (23) of the conveyor belt (3) are combined.

**16.** A method of cooking food products comprising cheese or constituted by cheese, by a baking oven (1) comprising a baking chamber (2) closed except for an inlet (5) and an outlet (6), a conveyor belt (3) movable in the baking chamber for supplying food products to be baked and unloading baked food products, heating means (4) to heat the food products in the baking chamber (2), said heating means (4) being selected among microwave heating means, infrared heating means and electric resistance heating means, alternatively or in combination with one another, extracting means (9) to extract air and vapor from the baking chamber (2) and a control unit (17) provided with program means programmed to adjust the flow rate of said extracting means (9), comprising the steps of:

a) baking the food products in the baking chamber (2) by the heating means, by extracting moisture in the vapor form from them;
b) programming, by the program means, the extracting means to extract an air and vapor flow rate Q from the baking chamber (2);
**characterized in that** the air and vapor flow rate Q extracted during step b) is equal to or higher than:

$$Q = \frac{V}{(U_{OUT} - U_{IN}) * d_A}$$

where:

Q is the volumetric flow rate of air and vapor to be withdrawn from the baking chamber (2) per each kilogram of food products passing through the baking chamber (2) itself,
V is the amount of vapor to be removed per each kilogram of food product passing through the baking chamber (2),
$U_{IN}$ is the specific humidity of the air entering the baking chamber (2),
$U_{OUT}$ is the specific humidity of the air withdrawn from the baking chamber (2),
$d_A$ is the air density,
wherein the vapor amount V is the difference between the water content $X_{IN}$ in each kilogram of food product to be baked, inserted in the baking chamber (2), and the water content $X_{OUT}$ being in each kilogram of baked food product extracted from the baking chamber (2), where $V = X_{IN} - X_{OUT}$, with $X_{OUT} < 50$ grams,
to obtain a baked food product having residual moisture lower than 5% by weight and shelf-life longer than four months at room temperature.

**17.** Baking method according to claim 16, wherein the flow rate Q is equal to at least 20m$^3$ per each kilogram of food product passing through the baking chamber (2).

**18.** Baking method according to claim 16 or 17, wherein the baking oven (1) comprises air inflow means (12) for the inflow of air into the baking chamber (2), and wherein the method provides the step of programming, by the program means, the inflow means for the inflow of air into the baking chamber, the air flow rate of the inlet of the inflow means being adjusted on the basis of the volumetric air and vapor flow rate withdrawn from the baking chamber (2) by the extracting means.

**Patentansprüche**

1. Backofen (1) zum Backen von Lebensmittelprodukten, die Käse enthalten oder aus Käse bestehen, umfassend eine Backkammer (2), ein in der Backkammer (2) bewegliches Förderband (3) zum Zuführen und Abführen von Lebensmittelprodukten, Heizmittel (4) zum Erhitzen der Lebensmittelprodukte in der Backkammer, wobei die Heizmittel aus Mikrowellenheizmitteln, Infrarotheizmitteln und elektrischen Widerstandsheizmitteln wahlweise oder in Kombination miteinander ausgewählt sind, und Abzugsmittel (9) zum Abziehen von Luft und Dampf aus der Backkammer,

   wobei die Backkammer gegenüber der äußeren Umgebung isoliert ist, mit Ausnahme eines Einlasses (5) und eines Auslasses (6) des Förderbandes (3),
   **dadurch gekennzeichnet, dass** er eine Steuereinheit (17) umfasst, die mit Programmmitteln versehen ist, die zum Einstellen der Durchflussrate der Abzugsmittel (9) derart programmiert sind, dass die Abzugsmittel (9) aus der Backkammer eine Durchflussrate Q von Luft und Dampf abziehen, die gleich oder höher ist als:

   $$Q = \frac{V}{(U_{OUT} - U_{IN}) * d_A}$$

   wobei:

   wobei Q der Volumenstrom an Luft und Dampf ist, der aus der Backkammer (2) pro Kilogramm des die Backkammer (2) durchlaufenden Lebensmittelprodukts abgezogen wird,
   V die Dampfmenge ist, die pro Kilogramm des die Backkammer (2) durchlaufenden Lebensmittelprodukts abgezogen werden muss,
   wobei $U_{IN}$ die spezifische Feuchte der in die Backkammer (2) einströmenden Luft ist,
   $U_{OUT}$ die spezifische Feuchte der aus der Backkammer (2) abgezogenen Luft ist,
   $d_A$ die Luftdichte ist,
   wobei die Dampfmenge V die Differenz zwischen dem Wassergehalt $X_{IN}$ in jedem Kilogramm des zu backenden Lebensmittelprodukts, das in die Backkammer (2) eingeführt wird, und dem Wassergehalt $X_{OUT}$ in jedem Kilogramm des gebackenen Lebensmittelprodukts, das aus der Backkammer (2) entnommen wird, ist, wobei V = $X_{IN}$ - $X_{OUT}$, mit $X_{OUT}$ < 50 Gramm,
   zum Erhalten eines gebackenen Lebensmittelprodukts mit einer Restfeuchtigkeit von weniger als 5 Gew.-% und einem Mindesthaltbarkeitsdatum von mehr als vier Monaten bei Raumtemperatur.

2. Backofen (1) nach Anspruch 1, wobei die Abzugsmittel (9) ein Minimum von 20m³ Luft und Dampf pro Kilogramm des die Backkammer (2) durchlaufenden Lebensmittelprodukts abziehen.

3. Backofen (1) nach Anspruch 1 oder Anspruch 2, wobei $d_A$ gleich 1,225 kg/m³ ist.

4. Backofen (1) nach einem der Ansprüche 1 bis 3, mit Lufteinströmmitteln (12) für die Lufteinströmung in die Backkammer (2), die vorzugsweise in der Nähe von mindestens einem Einlass (5) der Backkammer (2) angeordnet sind.

5. Backofen (1) nach Anspruch 4, wobei die Lufteinströmmittel einen Einlassluftstrom, der die gesamte Breite des Förderbandes (3) abfängt, auf die Oberfläche des Förderbandes (3) leiten, und die Abzugsmittel (9) so ausgelegt sind, dass sie einen Luft- und Dampfstrom durch die Abdeckung der gesamten Breite des Förderbandes (3) abziehen.

6. Backofen nach Anspruch 4 oder 5, wobei die Lufteinströmmittel (12) mindestens eine Einströmöffnung (13) umfassen, die strömungstechnisch mit einem Ventilator (14) verbunden ist, und die Abzugsmittel (9) mindestens eine Ausströmöffnung (10) umfassen, die strömungstechnisch mit mindestens einer Saugvorrichtung (11) verbunden ist, wobei die Einström- und Ausströmöffnungen die gesamte Breite des Förderbandes (3) abdecken und voneinander derart beabstandet sind, dass sich der Luft- und Dampfstrom auf der Oberfläche des Förderbandes (3) über dessen gesamte Breite und zumindest über die Hälfte der Länge der Backkammer (3) erstreckt.

7. Backofen (1) nach Anspruch 6, wobei der eintretende Luftstrom und der austretende Luft- und Dampfstrom laminar sind.

8. Backofen (1) nach einem der Ansprüche 4 bis 7, wobei Einstellmittel zum Einstellen der Durchflussrate der durch die Einströmmittel zugeführten Luft und der Durchflussrate der durch die Abzugsmittel abgezogenen Luft und Dämpfe vorgesehen sind, und wobei optional Luftfiltermittel (15) mit den Einströmmitteln und/oder den Abzugsmitteln kombiniert sind.

9. Backofen (1) nach einem der Ansprüche 4 bis 8, wobei die durch die Luftstrommittel in die Backkammer (2) eingeleitete Luft Umgebungsluft ist und die Einströmmittel mit Mitteln zur Messung der spezifischen Feuchte der eintretenden Luft Uin versehen sind oder alternativ Behandlungsmittel zur Luftbehandlung mit den Einströmmitteln kombiniert sind, zum Einströmen von Luft mit einer bestimmten spezifischen Feuchte Uin in die Backkammer (2).

10. Backofen (1) nach einem der vorhergehenden Ansprüche 4 bis 9, wobei die Durchflussrate der eintretenden Luft geringer ist als die Austrittsluft- und Dampfdurchflussrate, und in der Backkammer (2) ein leichter Unterdruck aufrechterhalten wird, um den Dampfabzug und gegebenenfalls die Expansion der Lebensmittelprodukte zu unterstützen.

11. Backofen (1) nach einem der vorhergehenden Ansprüche, wobei die Abzugsmittel eine Vielzahl von Ausströmöffnungen (10) umfassen, die mit einer oder mehreren Absaugvorrichtungen (11) strömungstechnisch verbunden sind, wobei jede Ausströmöffnung (10) einen entsprechenden Teil der aus der Backkammer (2) abgesaugten Luft- und Dampfdurchflussrate abzieht.

12. Backofen (1) nach einem der vorhergehenden Ansprüche, **dadurch gekennzeichnet, dass** den Lufteinströmmitteln Heizmittel zur Beheizung der eintretenden Luft für die Lufteinströmung in die Backkammer (2) zugeordnet sind, wobei die Heizmittel einstellbar sind.

13. Backofen (1) nach einem der vorhergehenden Ansprüche, wobei das Förderband (3) als geschlossenes Ringförderband ausgebildet ist und mit einer ersten und einer zweiten Bewegungsrolle (7, 8) zugeordnet ist, wobei die Rollen mit Aktuatoren (16) zur Änderung ihres Abstandes versehen sind, so dass während des Backens das Förderband (3) immer gespannt ist, wodurch mögliche Dehnungen des Förderbandes (3) ausgeglichen werden, und die Rollen näher zusammengerückt werden, so dass die Spannung des Förderbandes (3) bei Bedarf reduziert wird.

14. Backofen (1) nach Anspruch 13, wobei ein oder mehrere Positionssensoren (18) zur Erfassung der Position des Förderbandes (3) vorgesehen sind, und wobei die Aktuatoren (16) der Rollen zur Aufrechthaltung der Zentrierung des Förderbandes (3) durch Rückkopplung aufgrund der von den Positionssensoren erfassten Positionssignale antreibbar sind.

15. Backofen (1) nach einem der vorhergehenden Ansprüche, wobei dem unteren Teil des Ofens im Rücklaufweg des Förderbandes (3), Reinigungsmittel (21), Waschmittel (22) und Trocknungsmittel (23) des Förderbandes (3) zugeordnet sind.

16. Verfahren zum Kochen von Lebensmittelprodukten, die Käse enthalten oder aus Käse bestehen, mittels eines Backofens (1), der eine mit Ausnahme eines Einlasses (5) und eines Auslasses (6) geschlossene Backkammer (2), ein in der Backkammer bewegliches Förderband (3) zum Zuführen von zu backenden Lebensmittelprodukten und zum Abführen von gebackenen Lebensmittelprodukten, Heizmittel (4) zum Erhitzen der Lebensmittelprodukte in der Backkammer (2), wobei die Heizmittel (4) aus Mikrowellenheizmitteln, Infrarotheizmitteln und Elektrowiderstandsheizmitteln, wahlweise oder in Kombination miteinander, ausgewählt werden, Abzugsmittel (9) zum Abziehen von Luft und Dampf aus der Backkammer (2) und eine Steuereinheit (17) umfasst, die mit Programmmitteln versehen ist, die zum Einstellen der Durchflussrate der Abzugsmittel (9) programmiert sind, umfassend die Schritte:

a) Backen der Lebensmittelprodukte in der Backkammer (2) durch die Heizmittel, indem ihnen Feuchtigkeit in Dampfform entzogen wird;
b) Programmieren der Abzugsmittel durch die Programmmittel, um eine Luft- und Dampfdurchflussrate Q aus der Backkammer (2) abzuziehen;
**dadurch gekennzeichnet, dass** die in Schritt b) abgezogene Luft- und Dampfdurchflussrate Q gleich oder höher ist als:

$$Q = \frac{V}{(U_{OUT} - U_{IN}) * d_A}$$

wobei:

wobei Q der Volumenstrom an Luft und Dampf ist, der aus der Backkammer (2) pro Kilogramm des die Backkammer (2) durchlaufenden Lebensmittelprodukts abgezogen wird,
V die Dampfmenge ist, die pro Kilogramm des die Backkammer (2) durchlaufenden Lebensmittelprodukts abgezogen werden muss,
wobei $U_{IN}$ die spezifische Feuchte der in die Backkammer (2) einströmenden Luft ist,
$U_{OUT}$ die spezifische Feuchte der aus der Backkammer (2) abgezogenen Luft ist,
$d_A$ die Luftdichte ist,
wobei die Dampfmenge V die Differenz zwischen dem Wassergehalt $X_{IN}$ in jedem Kilogramm des zu backenden Lebensmittelprodukts, das in die Backkammer (2) eingeführt wird, und dem Wassergehalt $X_{OUT}$ in jedem Kilogramm des gebackenen Lebensmittelprodukts, das aus der Backkammer (2) entnommen wird, ist, wobei $V = X_{IN} - X_{OUT}$, mit $X_{OUT} < 50$ Gramm,
zum Erhalten eines gebackenen Lebensmittelprodukts mit einer Restfeuchtigkeit von weniger als 5 Gew.-% und einem Mindesthaltbarkeitsdatum von mehr als vier Monaten bei Raumtemperatur.

17. Backverfahren nach Anspruch 16, wobei die Durchflussrate Q mindestens 20m$^3$ pro Kilogramm eines die Backkammer (2) durchlaufenden Lebensmittelprodukts beträgt.

18. Backverfahren nach Anspruch 16 oder 17, wobei der Backofen (1) Lufteinströmmittel (12) für das Einströmen von Luft in die Backkammer (2) umfasst, und wobei das Verfahren den Schritt des Programmierens der Einströmmittel für das Einströmen von Luft in die Backkammer durch die Programmmittel vorsieht, wobei die Luftdurchflussrate des Eintrags der Einströmmittel auf der Grundlage der volumetrischen Luft- und Dampfdurchflussrate eingestellt wird, die aus der Backkammer (2) durch die Abzugsmittel abgezogen wird.

## Revendications

1. Un four de cuisson (1) pour cuire des produits alimentaires comprenant du fromage ou constitués de fromage, comprenant une chambre de cuisson (2), une bande transporteuse (3) mobile dans la chambre de cuisson (2) pour approvisionner et décharger des produits alimentaires, des moyens de chauffage (4) pour chauffer les produits alimentaires dans la chambre de cuisson, lesdits moyens de chauffage étant sélectionnés parmi des moyens de chauffage par micro-ondes, des moyens de chauffage par infrarouge et des moyens de chauffage par résistance électrique, alternativement ou en association les uns avec les autres, et des moyens d'extraction (9) pour extraire l'air et la vapeur de la chambre de cuisson,

dans lequel la chambre de cuisson est isolée de l'extérieur, à l'exception d'une entrée (5) et d'une sortie (6) de la bande transporteuse (3), caractérisé en qu'il comprend une unité de commande (17) pourvue de moyens de programmation programmés pour régler le débit desdits moyens d'extraction (9) de sorte que lesdits moyens d'extraction (9) extraient, de la chambre de cuisson, un débit Q d'air et de vapeur égal ou supérieur à:

$$Q = \frac{V}{(U_{OUT} - U_{IN}) * d_A}$$

dans lequel:

Q est le débit volumétrique d'air et de vapeur à extraire de la chambre de cuisson (2) pour chaque kilogramme de produits alimentaires traversant la chambre de cuisson (2) elle-même,

V est la quantité de vapeur à éliminer pour chaque kilogramme de produit alimentaire traversant la chambre de cuisson (2),

$U_{IN}$ est l'humidité spécifique de l'air entrant dans la chambre de cuisson (2),

$U_{OUT}$ est l'humidité spécifique de l'air extraite de la chambre de cuisson (2),

$d_A$ est la densité de l'air,

dans lequel la quantité de vapeur V est la différence entre la teneur en eau $X_{IN}$ dans chaque kilogramme de produit alimentaire à cuire, inséré dans la chambre de cuisson (2), et la teneur en eau $X_{OUT}$ contenue dans chaque kilogramme de produit alimentaire cuit extraite de la chambre de cuisson (2), où $V = X_{IN} - X_{OUT}$, avec $X_{OUT} < 50$ grammes, pour obtenir un produit alimentaire cuit ayant une humidité résiduelle inférieure à 5% en poids et une durée de conservation supérieure à quatre mois à température ambiante.

2. Four de cuisson (1) selon la revendication 1, dans lequel les moyens d'extraction (9) extraient un minimum de 20m$^3$ d'air et vapeur pour chaque kilogramme de produit alimentaire traversant la chambre de cuisson (2).

3. Four de cuisson (1) selon la revendication 1 ou la revendication 2, dans lequel $d_A$ est égal à 1,225 kg/m$^3$.

4. Four de cuisson (1) selon l'une quelconque des revendications 1-3, comprenant des moyens d'afflux d'air (12) pour l'afflux d'air dans la chambre de cuisson (2), lesquels sont de préférence disposés à côté d'au moins une entrée (5) de la chambre de cuisson (2).

5. Four de cuisson (1) selon la revendication 4, dans lequel les moyens d'afflux d'air dirigent, sur la surface de la bande transporteuse (3), un flux d'air d'entrée interceptant toute la largeur de la bande transporteuse (3), et les moyens d'extraction (9) sont conçus pour extraire un flux d'air et vapeur en interceptant toute la largeur de la bande transporteuse (3).

6. Four de cuisson selon la revendication 4 ou 5, dans lequel les moyens d'afflux d'air (12) comprennent au moins un orifice d'afflux (13) relié de manière fluidique à un ventilateur (14) et les moyens d'extraction (9) comprennent au moins un orifice d'écoulement (10) relié de manière fluidique à au moins un dispositif d'aspiration (11), lesdits orifices d'afflux et d'écoulement interceptant toute la largeur de la bande transporteuse (3) et étant espacés l'un du l'autre de sorte que le flux d'air et vapeur s'étende sur la surface de la bande transporteuse (3) en correspondance de toute sa largeur et au moins au long de la moitié de la longueur de la chambre de cuisson (3).

7. Four de cuisson (1) selon la revendication 6, dans lequel ledit flux d'air d'entrée et ledit flux d'air et vapeur sont laminaires.

8. Four de cuisson (1) selon l'une des revendications 4-7, dans lequel des moyens de réglage, pour régler le débit d'air introduit par les moyens d'afflux et le débit d'air et vapeur extrait par les moyens d'extraction, sont prévus et dans lequel des moyens de filtration d'air (15) sont éventuellement associés avec les moyens d'afflux et/ou les moyens d'extraction.

9. Four de cuisson (1) selon l'une des revendications 4-8, dans lequel l'air introduit dans la chambre de cuisson (2) par les moyens d'afflux d'air est air ambiant et les moyens d'afflux sont prévus avec moyens pour mesurer l'humidité spécifique de l'air en entrée $U_{IN}$ ou, alternativement, moyens de traitement pour traiter l'air sont associées avec les moyens d'afflux, pour l'afflux de l'air présentant une humidité spécifique $U_{IN}$ dans la chambre de cuisson (2).

10. Four de cuisson (1) selon l'une quelconque des revendications précédentes 4-9, dans lequel le débit d'air en entrée est inférieur au débit d'air et de vapeur en sortie, et la chambre de cuisson (2) est maintenue légèrement dépressurisée pour faciliter l'extraction de la vapeur et, le cas échéant, l'expansion des produits alimentaires.

11. Four de cuisson (1) selon l'une des revendications précédentes, dans lequel les moyens d'extraction comprennent une pluralité d'orifices d'écoulement (10) reliés de manière fluidique à un ou plusieurs dispositifs d'aspiration (11), dans lequel chaque orifice d'écoulement (10) extrait une partie correspondante du débit d'air et vapeur extrait de la chambre de cuisson (2).

12. Four de cuisson (1) selon l'une des revendications précédentes, dans lequel les moyens d'afflux d'air sont associés avec moyens de chauffage pour chauffer l'entrée d'air pour l'afflux d'air dans la chambre de cuisson (2), lesdits dispositifs de chauffage étant réglables.

13. Four de cuisson (1) selon l'une des revendications précédentes, dans lequel la bande transporteuse (3) est du type à boucle fermée et est associée avec un premier et un second rouleau de déplacement (7, 8), les rouleaux étant pourvus d'actionneurs (16) pour modifier leur distance de sorte que, pendant la cuisson, la bande transporteuse (3) soit toujours tendue, équilibrant ainsi d'éventuelles expansions de la bande transporteuse (3), et que les rouleaux sont rapprochés, réduisant ainsi la tension de la bande transporteuse (3) lorsque nécessaire.

14. Four de cuisson (1) selon la revendication 13, dans lequel un ou plusieurs capteurs de position (18) sont pourvus pour détecter la position de la bande transporteuse (3), et dans lequel les actionneurs (16) des rouleaux peuvent être opérés pour maintenir la bande transporteuse (3) centrée en rétroaction, en fonction des signaux de position détectés par les capteurs de position.

15. Four de cuisson (1) selon l'une des revendications précédentes, dans lequel sont associés sur la partie inférieure du four, sur la trajectoire de retour de la bande transporteuse (3), des moyens de nettoyage (21), des moyens de lavage (22) et des moyens de séchage (23) de la bande transporteuse (3).

16. Une méthode pour cuire des produits alimentaires comprenant fromage ou constitués de fromage, au moyen d'un four de cuisson (1) comprenant une chambre de cuisson (2) fermée, à l'exception d'une entrée (5) et d'une sortie (6), une bande transporteuse (3) mobile dans la chambre de cuisson pour approvisionner produits alimentaires à cuire et pour décharger produits alimentaires cuits, des moyens de chauffage (4) pour chauffer les produits alimentaires dans la chambre de cuisson (2), lesdits moyens de chauffage (4) étant sélectionnés parmi des moyens de chauffage par micro-ondes, des moyens de chauffage par infrarouge et des moyens de chauffage par résistance électrique, alternativement ou en association les uns avec les autres, des moyens d'extraction (9) pour extraire l'air et la vapeur de la chambre de cuisson (2) et une unité de commande (17) pourvue de moyens de programmation programmés pour régler le débit desdits moyens d'extraction (9), comprenant les étapes de:

a) cuire les produits alimentaires dans la chambre de cuisson (2) par les moyens de chauffage, en extrayant leur humidité sous forme de vapeur;

b) programmer, par les moyens de programmation, les moyens d'extraction pour extraire un débit Q d'air et vapeur de la chambre de cuisson (2);

**caractérisée en ce que** le débit Q d'air et vapeur extrait pendant l'étape b) est égal ou supérieur à:

$$Q = \frac{V}{(U_{OUT} - U_{IN}) * d_A}$$

dans lequel:

Q est le débit volumétrique d'air et de vapeur à extraire de la chambre de cuisson (2) pour chaque kilogramme de produits alimentaires traversant la chambre de cuisson (2) elle-même,

V est la quantité de vapeur à éliminer pour chaque kilogramme de produit alimentaire traversant la chambre de cuisson (2),

$U_{IN}$ est l'humidité spécifique de l'air entrant dans la chambre de cuisson (2),

$U_{OUT}$ est l'humidité spécifique de l'air extraite de la chambre de cuisson (2),

$d_A$ est la densité de l'air,

dans lequel la quantité de vapeur V est la différence entre la teneur en eau $X_{IN}$ dans chaque kilogramme de produit alimentaire à cuire, inséré dans la chambre de cuisson (2), et la teneur en eau $X_{OUT}$ contenue dans chaque kilogramme de produit alimentaire cuit extraite de la chambre de cuisson (2), où $V = X_{IN} - X_{OUT}$, avec $X_{OUT} < 50$ grammes, pour obtenir un produit alimentaire cuit ayant une humidité résiduelle inférieure à 5% en poids et une durée de conservation supérieure à quatre mois à température ambiante.

17. Méthode de cuisson selon la revendication 16, dans laquelle le débit Q est au moins égal à 20m$^3$ pour chaque kilogramme de produit alimentaire traversant la chambre de cuisson (2).

18. Méthode de cuisson selon la revendication 16 ou 17, dans laquelle le four de cuisson (1) comprend des moyens d'afflux d'air (12) pour l'afflux d'air dans la chambre de cuisson (2) et dans laquelle la méthode prévoit l'étape de programmer, à travers les moyens de programmation, les moyens d'afflux pour l'afflux d'air dans la chambre de cuisson, le débit d'air de l'entrée des moyens d'afflux étant réglé en fonction du débit volumétrique d'air et vapeur extrait de la chambre de cuisson (2) par les moyens d'extraction.

FIG. 1

EP 3 707 449 B1

FIG. 2

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2015264947 A